# EUROPEAN PATENT APPLICATION

(11) **EP 4 832 151 A1**
(43) Date of publication of application: **28.10.2026**
(21) Application number: 24907960.9
(22) Date of filing: 10.12.2024
(51) Int. Cl.: H01M 10/54, B09B 3/35

(54) **METHOD OF DISPOSING BATTERY**

(30) Priority: 18.12.2023 KR 20230185166
(71) Applicant: POSCO Holdings Inc., Pohang-si, Gyeongsangbuk-do 37859 (KR)
(72) Inventor: PARK, Junyong, Pohang-si, Gyeongsangbuk-do 37859 (KR); PARK, Joongkil, Pohang-si, Gyeongsangbuk-do 37859 (KR); PARK, Chonglyuck, Pohang-si, Gyeongsangbuk-do 37859 (KR); KIM, Wanyi, Pohang-si, Gyeongsangbuk-do 37859 (KR); HAN, Sangwoo, Pohang-si, Gyeongsangbuk-do 37859 (KR); LEE, Juseung, Pohang-si, Gyeongsangbuk-do 37859 (KR)
(74) Representative: Pfenning, Meinig & Partner mbB
(86) International application number: PCT/KR2024/020210
(87) International publication number: WO 2025/135676

(57) **Abstract**

The present invention relates to a battery processing method, and relates to a method for processing a waste battery. The method includes preparing a battery, measuring a voltage of the battery, low-temperature treating the battery at a temperature equal to or lower than a minimum temperature according to the voltage of the battery, and shredding the battery, wherein the minimum temperature satisfies the following Formula 1.

The minimum temperature satisfies the following Formula 1. <Formula 1> $Minimum temperature = 21.42857 + \left(-21.1255\right) \times voltage + \left(-0.69264\right) \times {voltage}^{2} \pm 0.5$ wherein, in Formula 1, the voltage means a cell-based voltage of the battery.

## Description

### [TECHNICAL FIELD]

The present invention relates to waste batteries, and more particularly, to a battery shredding method recovered from waste batteries.

### [BACKGROUND ART]

Due to environmental issues, demand and supply of electric vehicles, for which battery technology is a key element, are rapidly increasing. Waste batteries generated from the electric vehicles are becoming a social issue in terms of treatment thereof. Such batteries for electric vehicles are secondary batteries capable of charging and discharging, and are characterized by containing lithium. The key components of the battery include a positive electrode material, a negative electrode material, a current collector, an electrolyte, and a separator.

As a raw material of the positive electrode material, Ni, Co, and Mn oxides are used, and as a raw material of the negative electrode material, carbon is used. As the current collectors, Al and Cu foils are used. The battery is assembled into a pack in order to apply a cell, which is the smallest unit, for automobiles, and in this process, plastic cases and iron bolts, nuts, frames, and the like are used. Among these, valuable metals such as Li, Ni, Co, and Mn have great value, and in particular, Li is a component whose value has recently sharply increased. Accordingly, interest in recovery and recycling of these rare components is increasing.

Even when an automobile battery reaches the end of its life, it may be recyclable in another field. The other field may be, for example, an energy storage system (ESS). After recycling in such an energy storage system, a battery that has reached the end of its life is treated as a waste battery.

In general, in a process of recovering the waste battery, black mass is manufactured through processes of disassembling, discharging, shredding, and heat-treating the battery, and thereafter, the black mass is used as a raw material of a positive electrode material through wet refining. At this time, there is a risk of fire and explosion in the process of shredding the battery, and various methods for safely shredding the battery are being studied.

As a method for safely shredding the battery, water discharging using water or brine is representative. However, there is a problem in that the method is labor-intensive because the battery must be disassembled down to a cell unit and additional processing for penetration of a solution into the cell must be performed, and is not environmentally friendly because wastewater is generated. In addition, there is a problem that components such as Na, Cl, K, and Mg are contaminated due to use of brine.

As described above, as a first step for recycling waste batteries, interest in a safe and environmentally friendly battery processing method is increasing.

### [DETAILED DESCRIPTION OF THE INVENTION]

### [Technical Problem]

A technical problem to be solved by the present invention is to provide a battery processing method for safely shredding a waste battery.

### [Technical Solution]

A battery processing method according to one embodiment of the present invention relates to a method for processing a waste battery, and includes preparing a battery, measuring a voltage of the battery, low-temperature treating the battery at a temperature equal to or lower than a minimum temperature according to the voltage of the battery, and shredding the battery, wherein the minimum temperature satisfies the following Formula 1. <Formula 1> $Minimum temperature = \left(21.42857+\left(-21.1255\right)\times voltage+\left(-0.69264\right)\times {voltage}^{2}\right) \pm 0.5$ wherein, in Formula 1, the voltage means a voltage of the battery.

In one embodiment, the voltage of the battery measured in the measuring of the voltage of the battery may be 0 to 4.2 V on a cell basis. In one embodiment, the low-temperature treating may treat the battery at 10°C or lower.

In one embodiment, the low-temperature treating may treat the battery for a minimum freezing time or longer, and the minimum freezing time may satisfy the following Formula 2. <Formula 2> 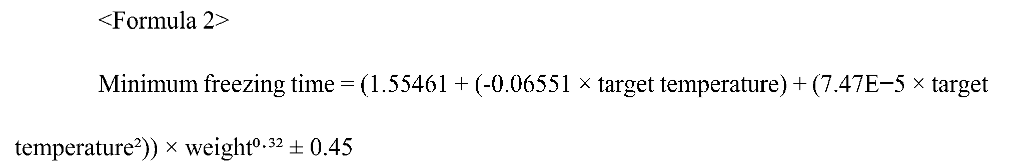 Minimum freezing time = (1.55461 + (-0.06551 × target temperature) + (7.47E-5 × target temperature2)) × weight0·32 ± 0.45 wherein, in Formula 2, the target temperature means a target temperature (°C) for low-temperature treating the battery, and the weight means a weight (kg) of the battery.

In one embodiment, in the step of low-temperature treating the battery for the minimum freezing time or longer according to the voltage of the battery, when the battery is a module having a plurality of cells, a freezing completion time of the battery may be 10 hours or longer. In one embodiment, the module may have a weight of 28 to 32 kg.

In one embodiment, in the step of low-temperature treating the battery for the minimum freezing time or longer according to the voltage of the battery, when the battery is a cell, a freezing completion time of the battery may be 2 hours or longer. In one embodiment, the cell may have a weight of 0.5 to 1.5 kg.

In one embodiment, the shredding of the battery may shred the battery into a particle size range of 5 to 80 mm. In one embodiment, the shredding of the battery may be performed using a two-shaft two-stage shredder.

In one embodiment, the measuring of the voltage of the battery may include reducing the voltage of the battery. In one embodiment, battery shredded material having undergone the shredding of the battery may satisfy the following Condition 1 or Condition 2.

### <Condition 1>

The layered structure may be a stacked structure of 1 layer or more and 7 layers or fewer.

### <Condition 2>

The size of the battery shredded material may be 100 mm or less based on a major axis, which is the longest axis among width, length, and height directions.

### [Advantageous Effects]

The battery processing method according to one embodiment of the present invention provides a processing method for safely shredding a battery by controlling a minimum cooling temperature according to a voltage of a cell in the battery.

### [BRIEF DESCRIPTION OF THE DRAWINGS]

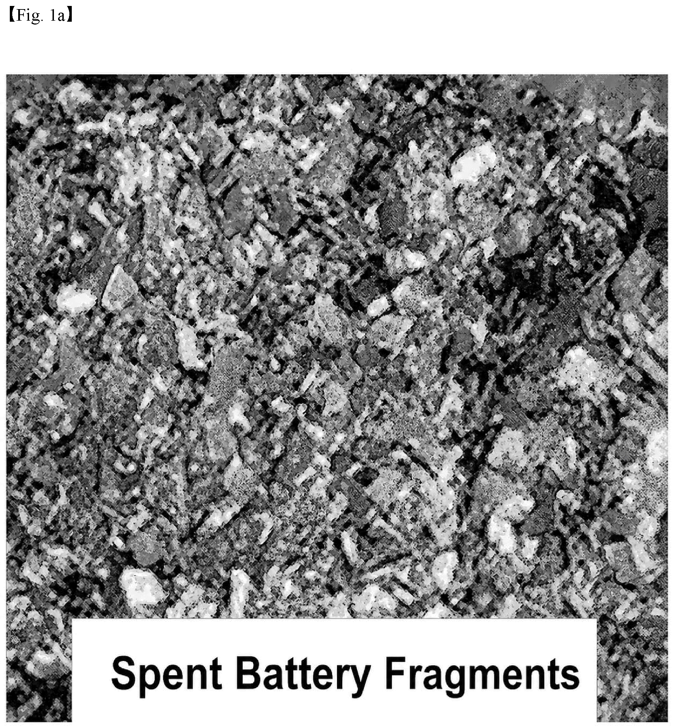

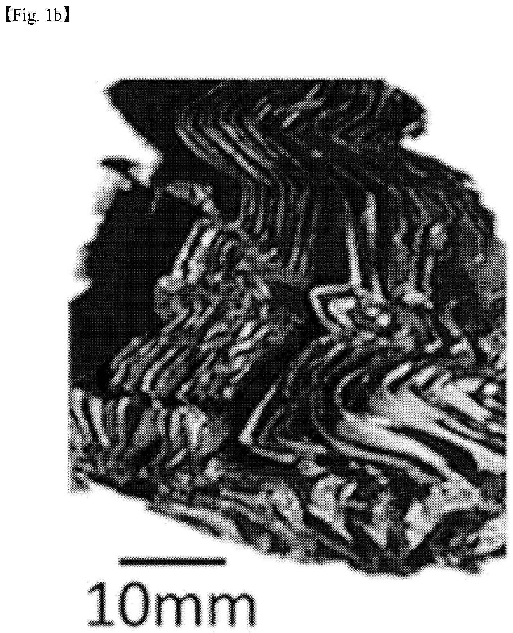

FIGS. 1A and 1B are photographs of battery shredded material according to one embodiment of the present invention.
FIGS. 2A and 2B show ignition occurring from a battery in a shredding step of the present invention.
FIGS. 3A and 3B show temperatures of a shredder and shredded material measured in a shredding step of the present invention.
FIG. 4 shows a freezing time required according to a temperature of a module.

### [MODE FOR CARRYING OUT THE INVENTION]

Terms such as first, second, and third are used to describe various parts, components, regions, layers, and/or sections, but are not limited thereto. These terms are used only to distinguish one part, component, region, layer, or section from another part, component, region, layer, or section. Accordingly, a first part, component, region, layer, or section described below may be referred to as a second part, component, region, layer, or section without departing from the scope of the present invention.

The terminology used herein is merely for referring to particular embodiments and is not intended to limit the present invention. As used herein, singular forms also include plural forms unless the context clearly indicates otherwise. As used in the specification, the term "comprising" specifies stated features, regions, integers, steps, operations, elements, and/or components, and does not exclude the presence or addition of other features, regions, integers, steps, operations, elements, and/or components.

When a part is referred to as being "above" or "on" another part, it may be directly above or on the other part, or another part may be interposed therebetween. In contrast, when a part is referred to as being "directly above" another part, no other part is interposed therebetween.

Although not otherwise defined, all terms used herein, including technical and scientific terms, have the same meanings as commonly understood by a person having ordinary skill in the art to which the present invention pertains. Terms defined in commonly used dictionaries are further interpreted as having meanings consistent with the related technical literature and the presently disclosed content, and unless defined otherwise, are not interpreted in an idealized or overly formal sense.

Hereinafter, embodiments of the present invention will be described in detail. However, these are presented as examples, and the present invention is not limited thereby, and the present invention is defined only by the scope of the claims to be described below.

A battery processing method according to one embodiment of the present invention may be a method for processing a waste battery. Specifically, the method includes preparing a battery, measuring a voltage of the battery, low-temperature treating the battery at a temperature equal to or lower than a minimum temperature according to the voltage of the battery, and shredding the battery. Specifically, the battery processing method of the present invention may be a method capable of stably processing a battery without causing fire when shredding the battery by subjecting the battery to a low-temperature treatment process at or above a minimum freezing temperature according to the voltage of the battery.

In the preparing of the battery, the battery may be, for example, a lithium secondary battery separated from an automobile, a secondary battery separated from an electronic device such as a mobile phone, a camera, or a notebook computer, and specifically a lithium secondary battery. Specifically, the battery may be a waste battery that has reached the end of its life. The battery may have a voltage of about 4.5 V under a 100% SOC condition. The battery of the present invention may have a voltage of 2.0 to 4.5 V. Specifically, the voltage may be 2.5 to 4.0 V, and more specifically 3.0 to 4.0 V.

The measuring of the voltage of the battery may be a step of measuring the voltage of the battery. For example, the voltage of the battery may be a step of measuring a voltage of a module, a pack, or a cell. Specifically, the voltage of the battery may be a step of measuring a voltage of a cell. Specifically, the measuring of the voltage may be a step of measuring the voltage of the cell by using a general tester and bringing terminals into contact with + and - poles of the battery. The measuring of the voltage of the battery may be a step of determining a state of the battery in order to freeze the battery for a minimum freezing time to be described below.

In one embodiment, the voltage of the battery measured in the measuring of the voltage of the battery may be 0 to 4.2 V on a cell basis. Specifically, since the waste battery may have about 4.2 V under a 100% SOC condition, a voltage lower than 4.2 V may be measured.

In one embodiment, the measuring of the voltage of the battery may include reducing the voltage of the battery. Specifically, the voltage of the battery may be controlled to a voltage of 0 to 4.2 V based on a cell in the battery. The reducing of the voltage of the battery may control the voltage of the cell in the battery through, for example, electrical discharge.

The step of low-temperature treating the battery at a temperature equal to or lower than the minimum temperature according to the voltage of the battery may be a step of freezing and stabilizing an electrolyte included in the battery. By treating the battery at or below the minimum temperature, when the battery is shredded, it is possible to prevent fire from occurring due to a hazardous material such as the electrolyte.

In one embodiment, the minimum temperature may satisfy the following Formula 1. <Formula 1> $Minimum temperature = 21.42857 + \left(-21.1255\right) \times voltage + \left(-0.69264\right) \times {voltage}^{2} \pm 0.5$ wherein, in Formula 1, the voltage means a cell-based voltage (V) of the battery.

Formula 1 means a minimum cooling temperature according to the cell-based voltage of the battery in the battery low-temperature treatment step. Formula 1 has a lower limit value of 21.42857 + (-21.1255) × voltage + (-0.69264) × voltage² - 0.5 and an upper limit value of 21.42857 + (-21.1255) × voltage + (-0.69264) × voltage² + 0.5, and in the battery low-temperature treatment step, the low-temperature treating may be performed at a temperature equal to or lower than the range of the lower limit value and the upper limit value of Formula 1.

By satisfying Formula 1, low-temperature treatment of a battery having a specific voltage can be easily performed, thereby minimizing occurrence of fire in the battery in the shredding step. When the battery treatment is performed outside the range of Formula 1, stabilization of a battery having a specific voltage may not be smoothly achieved, and a problem such as fire may occur when the battery is shredded.

In one embodiment, the low-temperature treating may be a step of treating the battery at 10°C or lower. Specifically, in the low-temperature treating, when the voltage of the battery is 1.0 V or less, the battery may be treated at a temperature of 0°C or lower. More specifically, when the voltage of the battery is 1.5 to 2.0 V, the battery may be low-temperature treated at a temperature of -15°C or lower. More specifically, when the voltage of the battery is about 2.5 V, the battery may be low-temperature treated at a temperature of -30°C or lower. More specifically, when the voltage of the battery is 3 to 3.5 V, the battery may be low-temperature treated at a temperature of -50°C or lower. As described above, the battery has an advantage of being safely shred in the shredding process by performing low-temperature treatment in a specific temperature range according to the cell-based voltage of the battery.

By performing the step of low-temperature treating the battery in the above temperature range, a voltage remaining slightly inside the battery, for example, a voltage of about 2 V to 3 V, decreases close to 0 V, and thus even if a short circuit in which a positive electrode and a negative electrode directly contact each other occurs, a battery reaction does not occur, so that the battery temperature does not increase and gas generation and combustion of the electrolyte do not occur. In addition, since the electrolyte is in a frozen state or a state in which vaporization is suppressed, the mobility of lithium ions is very low, electrical conduction characteristics due to movement of the lithium ions can be remarkably reduced, and because vaporization of the electrolyte solution does not occur, combustible gases such as ethylene, propylene, and hydrogen may not be generated.

When the low-temperature treatment step is performed at a temperature higher than the above temperature range, the voltage remaining inside the battery is not reduced to 0 V, and thus a battery reaction due to a short circuit may occur, and the electrolyte is not completely frozen, which is not appropriate. As described above, the battery processing method has an advantage of preventing a risk of fire that may occur in the battery shredding process by including the step of low-temperature treating a battery such as a lithium secondary battery before shredding the battery.

In one embodiment, the low-temperature treating may include treating the battery for a minimum freezing time or longer. The minimum freezing time may satisfy the following Formula 2. <Formula 2> 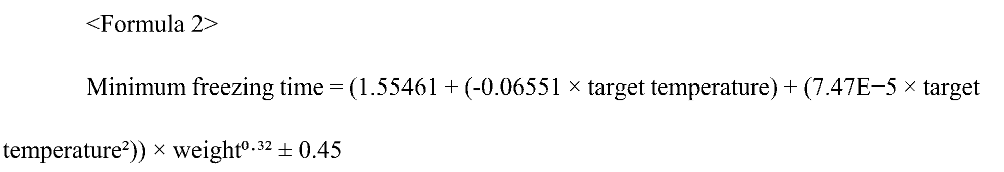 Minimum freezing time = (1.55461 + (-0.06551 × target temperature) + (7.47E-5 × target temperature2)) × weight0·32 ± 0.45 wherein, in Formula 2, the target temperature means a target temperature (°C) for low-temperature treating the battery, and the weight means a weight (kg) of the battery.

Formula 2 means the minimum freezing time of the battery derived according to the weight and freezing time of the battery. Formula 2 may satisfy a range between a lower limit value of (1.55461+(-0.06551 × target temperature)+(7.47E-5 × target temperature²)) × weight⁰·³² - 0.45 and an upper limit value of (1.55461+(-0.06551 × target temperature)+(7.47E-5 × target temperature²)) × weight⁰·³² + 0.45, and may be performed for a time equal to or longer than the value of Formula 2 satisfying the range of the upper limit value and the lower limit value.

As Formula 2 satisfies the above-described range, before the battery shredding step, the battery can be stabilized, and when the battery is low-temperature treated so that the battery can be safely shredded in the battery shredding step, economic feasibility and safety can be improved in consideration of the minimum freezing time. When Formula 2 does not satisfy the above-described range, there is a problem that the electrolyte solution in the battery is not appropriately frozen and stabilized.

In one embodiment, the low-temperature treating of the battery may be performed for 2 hours or longer. Specifically, when the battery is a module including a plurality of cells, a freezing completion time of the module may be 10 hours or longer. Specifically, the freezing completion time of the module may be 10 to 26 hours. The weight of the module may be 28 to 32 kg.

When the battery is a cell, a freezing completion time of the cell may be 2 hours or longer. Specifically, the freezing completion time may be 3 hours or longer, and more specifically may be performed for 3 to 12 hours. The weight of the cell may be 0.5 to 1.5 kg.

As the low-temperature treating of the battery is performed for the above-described time, stabilization of the battery is easily performed, and when the battery is shredded, fire from the battery can be prevented.

When the freezing of the battery takes an excessively long time beyond the above time, there is a problem of lack of economic feasibility. When the freezing of the battery is performed for an excessively short time below the above time, there is a problem that stabilization of the battery is not easily performed.

The shredding of the battery may mean a process of applying impact or pressure to the battery so that a part of the battery is separated from the battery. In one embodiment, the shredding of the battery may mean all of a process of pulverizing the battery, a process of cutting the battery, a process of compressing the battery, and a combination thereof. Specifically, the shredding may include all processes capable of destroying the battery and obtaining shredded material having a small size.

In one embodiment, the shredding of the battery may include all processes of compressing the frozen battery or applying an external force such as shear force or tensile force to destroy the battery. The shredding of the battery may be performed using, for example, a shredder.

In one embodiment, the shredding of the battery may be performed at least once. Specifically, the shredding may be performed continuously or discontinuously at least once. In one embodiment, the shredding of the battery may be performed using a two-shaft two-stage shredder.

In one embodiment, the shredding of the battery may be performed under a condition of supplying an inert gas, carbon dioxide, nitrogen, water, or a combination thereof, or under a vacuum atmosphere condition of 100 torr or less. For example, when the process of freezing the battery is performed by cooling in a temperature range of -60 to -20°C, when the process is performed under the above-described conditions, oxygen supply can be suppressed to prevent the electrolyte from reacting with oxygen, explosion resulting therefrom can be prevented, vaporization of the electrolyte solution can be suppressed, and combustible gases such as ethylene, propylene, or hydrogen may not be generated.

In one embodiment, the battery shredded material shredded from the shredding of the battery may satisfy the following Condition 1.

### <Condition 1>

The layered structure may be a stacked structure of 1 layer or more and 7 layers or fewer.

The battery shredded material may be a layered structure having a stacked structure of 1 layer or more and 7 layers or fewer. Specifically, the layered structure may be a stacked structure of 1 layer or more and 5 layers or fewer. As the layered structure is stacked within the above range, an amount of temperature increase of the shredded material can be minimized, and a temperature increase time can be appropriately required. When the layered structure is stacked thicker than the upper limit value of the above range, there is a problem that the amount of temperature increase excessively increases, and the temperature increase time also increases, causing combustion and thus fire.

In one embodiment, the battery shredded material may satisfy the following Condition 2.

### <Condition 2>

The size of the battery shredded material may be 100 mm or less based on a major axis, which is the longest axis among width, length, and height directions.

In one embodiment, the battery shredded material may have a size of 100 mm or less based on the major axis. Specifically, the size of the battery shredded material may be 50 mm or less. When the size of the battery shredded material is excessively large, there is a problem that the temperature of the battery shredded material itself rises to 100°C or higher, and thus there is a high possibility of fire.

Hereinafter, preferred Examples and Comparative Examples of the present invention will be described. However, the following Examples are merely preferred embodiments of the present invention, and the present invention is not limited to the following Examples.

### <Experimental Example>

### Battery Preparation Step

With respect to an NCM622 lithium ion battery having about 4.2 V when SOC was 100%, batteries having cell-based voltages of 4, 3.5, 3, 2.5, 1.5, 1, 0.5, and 0 V were prepared. A target battery voltage was adjusted through electrical discharge, and cell-based battery discharge was set not to exceed 5 hours for each stage under conditions of 1 to 10 A, and discharge was performed stepwise from 3.5 to 0 V. After discharge, the battery was prepared by using a voltage rebounded for 24 hours as a final target voltage.

Table 1 below shows amperes according to battery voltage.

**[Table 1]**

| Voltage (V) | Ampere (A) |
|---|---|
| 4.2~3.5 | 10 |
| 3.5~3.0 | 5 |
| 3.0~0.5 | 3 |
| 0.5~0 | 1 |

### Cryogenic Treatment Step

In order to confirm a time point at which a temperature of the sample became the same as the temperature of a freezer, the sample was connected to a thermometer (thermocouple, TC) and then subjected to freezing treatment to confirm a freezing completion time point.

### Battery Shredding Step

The battery that had undergone the cryogenic treatment was shredded in a particle size range of 5 to 80 mm using a two-shaft two-stage shredder. The shredding was completed within 5 minutes for a module and within 3 minutes for a cell.

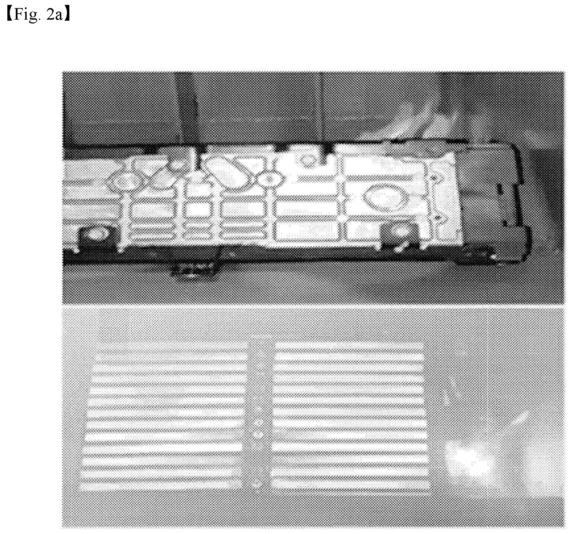

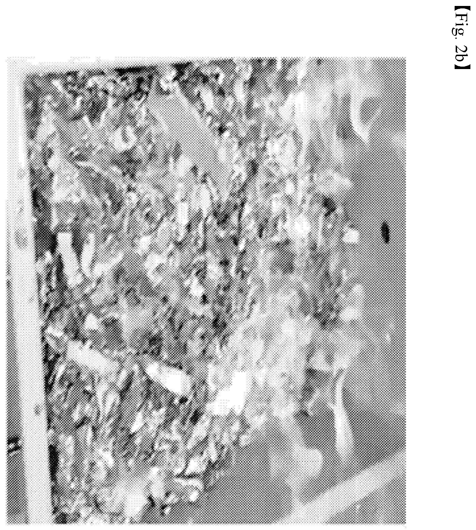

FIGS. 2A and 2B show ignition occurring from a battery in the shredding step of the present invention.

FIG. 2A shows ignition occurring from the battery during battery shredding, and FIG. 2B shows ignition occurring from battery shredded material after battery shredding. As described above, referring to FIGS. 2A and 2B, since the battery includes an ignition material such as an electrolyte solution in the battery, when a predetermined external force is applied to the battery, there is a problem that activation energy is maximized and the battery is ignited. Accordingly, a low-temperature treatment step for stabilizing the ignition material in the battery is required.

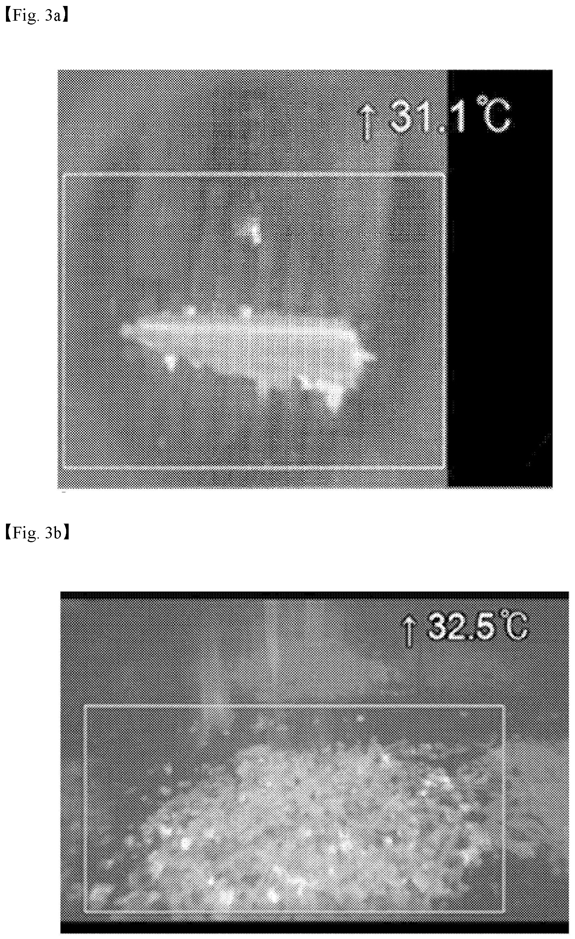

FIGS. 3A and 3B show temperatures of a shredder and shredded material measured in the shredding step of the present invention.

FIG. 3A shows the temperature inside the shredder, and FIG. 3B shows the temperature of the shredded material. By measuring the temperature inside the shredder and the temperature of the shredded material, whether ignition of the battery occurs can be confirmed.

### <Evaluation Example 1>: Derivation of Optimal Temperature Range According to Voltage

Low-temperature treatment of a battery is used for the purpose of preventing vaporization of an electrolyte solution, and at this time, it was confirmed that an amount of temperature increase after shredding varied depending on the voltage remaining in the battery. Accordingly, the voltage of the battery was measured in a cell unit, and at this time, a low-temperature treatment temperature according to the voltage was confirmed.

The voltage was measured by bringing terminals into contact with the + pole and - pole of the battery using a voltage measurement tester, and whether fire occurred was determined by visual observation and by installing thermal imaging cameras inside the shredder and in a shredded material collection container to observe temperature changes inside the shredder and in the shredded material during shredding. When fire occurred, it was indicated as ○, and when fire did not occur, it was indicated as ×.

Table 2 below shows whether fire occurred during cryogenic treatment according to voltage.

**[Table 2]**

| | Temperature | Voltage | Lower Limit Value of Formula 1 | Upper Limit Value of Formula 1 | Whether Formula 1 Is Satisfied | Whether Fire Occurred |
|---|---|---|---|---|---|---|
| Example | 10 | 0 | 16.42857 | 26.42857 | ○ | × |
| Example | | 0.5 | 5.69266 | 15.69266 | ○ | × |
| Comparative Example | | 1.0 | -5.38957 | 4.61043 | × | ○ |
| Example | 0 | 1.0 | -5.38957 | 4.61043 | ○ | × |
| Comparative Example | | 1.5 | -16.81812 | -6.81812 | × | ○ |
| Comparative Example | | 2.0 | -28.59299 | -18.59299 | × | ○ |
| Example | -20 | 1.5 | -16.81812 | -6.81812 | ○ | × |
| Example | | 2.0 | -28.59299 | -18.59299 | ○ | × |
| Comparative Example | | 2.5 | -40.71418 | -30.71418 | × | ○ |
| Example | -40 | 2.5 | -40.71418 | -30.71418 | ○ | × |
| Comparative Example | | 3.0 | -53.18169 | -43.18169 | × | ○ |
| Comparative Example | | 3.5 | -65.99552 | -55.99552 | × | ○ |
| Example | -60 | 3.0 | -53.18169 | -43.18169 | ○ | × |
| Example | | 3.5 | -65.99552 | -55.99552 | ○ | × |
| Comparative Example | | 4.0 | -79.15567 | -69.15567 | × | ○ |
| Comparative Example | -90 | 4.0 | -79.15567 | -69.15567 | × | ○ |
| Lower limit value of Formula 1: 21.42857+(-21.1255)×voltage+(-0.69264)×voltage²-0.5 | | | | | | |
| Upper limit value of Formula 1: 21.42857+(-21.1255)×voltage+(-0.69264)×voltage²+0.5 | | | | | | |

Referring to Table 2, when examining the value of Formula 1, which is an index of a minimum cooling temperature according to voltage, it was confirmed that when the battery was subjected to cryogenic treatment at a temperature lower than the value of Formula 1, fire did not occur in the battery shredding process. Specifically, it was confirmed that when the battery was subjected to cryogenic treatment at a temperature lower than the range of the upper limit value to the lower limit value of Formula 1, fire did not occur.

### <Evaluation Example 2>: Minimum Freezing Time According to Freezing Treatment Temperature Depending on Weight

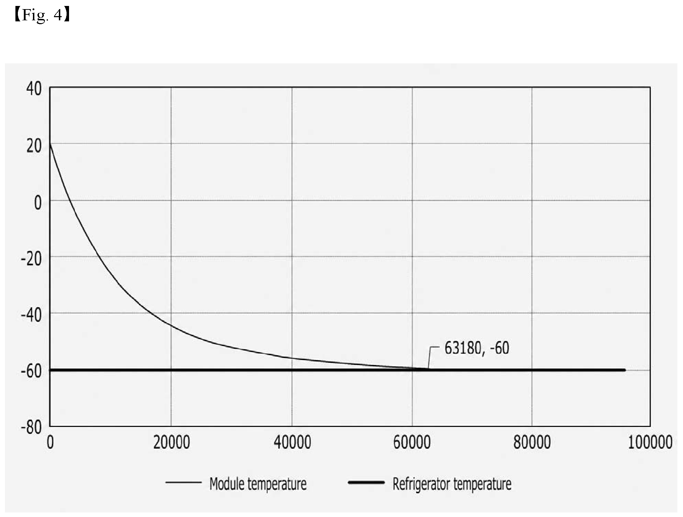

FIG. 4 shows a freezing time required according to a temperature of a module.

Referring to FIG. 4, a module of about 30 kg decreased in temperature over time.

The battery was subjected to cryogenic treatment at -60°C for 24 hours. Specifically, FIG. 4 is a graph showing a result of measuring the time required for the temperature of the module to reach -60°C, which is the temperature of the freezer, when the module was placed in the freezer set to -60°C. More specifically, the time may be a freezing time required to freeze the module to a target temperature.

Table 3 below shows freezing times according to temperatures depending on weights of a module and cells.

**[Table 3]**

| Weight | 30 kg (Module) | | | | 1kg (One Cell) | | | | 3kg (Three Cells) | | | |
|---|---|---|---|---|---|---|---|---|---|---|---|---|
| Target Tempera ture | Freezin g Time | Lower Limit Value of Formula 2 | Upper Limit Value of Formula 2 | Whether Formula 2 Is Satisfie d | Freezi ng Time | Lower Limit Value of Formula 2 | Upper Limit Value of Formula 2 | Wheth er Formul a 2 Is Satisfi | Freezin g Time | Lower Limit Value of Formula 2 | Upper Limit Value of Formula 2 | Whethe r Formula 2 Is Satisfie |
| | | | | | | | | ed | | | | d |
| 0°C | 5 | 4.166 | 5.066 | ○ | 2 | 1.105 | 2.005 | ○ | 2 | 1.760 | 2.660 | ○ |
| | 3 | | | × | 1 | | | × | 1 | | | × |
| -20 °C | 9 | 8.146 | 9.046 | ○ | 3 | 2.445 | 3.345 | ○ | 4 | 3.664 | 4.564 | ○ |
| | 7 | | | × | 1 | | | × | 1 | | | × |
| -40 °C | 13 | 12.302 | 13.202 | ○ | 4 | 3.845 | 4.745 | ○ | 6 | 5.654 | 6.554 | ○ |
| | 11 | | | × | 2 | | | × | 4 | | | × |
| -60 °C | 17 | 16.637 | 17.537 | ○ | 6 | 5.304 | 6.204 | ○ | 8 | 7.728 | 8.628 | ○ |
| | 15 | | | × | 4 | | | × | 6 | | | × |
| -90 °C | 24 | 23.471 | 24.371 | ○ | 8 | 7.606 | 8.506 | ○ | 11 | 10.999 | 11.899 | ○ |
| | 22 | | | × | 6 | | | × | 9 | | | × |
| Lower limit value of Formula 2: (1.55461+(-0.06551×target temperature)+(7.47E-5×target temperature²))*weight⁰·³²-0.45 | | | | | | | | | | | | |
| Upper limit value of Formula 2: (1.55461+(-0.06551×target temperature)+(7.47E-5×target temperature²))*weight⁰·³²+0.45 | | | | | | | | | | | | |

Referring to Table 2, when a 30 kg module, one 1 kg cell, or three 3 kg cells were put into a freezer at a set temperature, it was confirmed that hazardous materials such as the electrolyte solution in the battery were stabilized when the battery was frozen for a time longer than the range of Formula 2, which is the minimum freezing time required to reach the set freezer temperature. Specifically, when a 30 kg module was put into a freezer at -40°C, it was confirmed that cooling for 13 hours or longer was required to reach the target temperature of -40°C, which was the same as the temperature of the freezer. Specifically, it was confirmed that when the battery was cooled for a time shorter than the range of the lower limit value and the upper limit value of Formula 2, which is the minimum freezing time for reaching the target temperature, the temperature of the battery did not reach the target temperature, which was the temperature of the freezer.

In contrast, when the battery was cooled for a time longer than the range of the lower limit value to the upper limit value of Formula 2, it was confirmed that the battery was set to have the same temperature as the freezer temperature, which was the set target temperature. As described above, by deriving the minimum cooling time according to the weight of the battery, the battery can be efficiently stabilized before the battery shredding process, thereby preventing problems such as fire.

Although preferred embodiments have been described above in detail, the scope of the present invention is not limited thereto, and various modifications and improvements made by those skilled in the art using the basic concept defined in the following claims also fall within the scope of the present invention.

## Claims

1. A battery processing method relating to a method for processing a waste battery, the battery processing method comprising:
preparing a battery;
measuring a voltage of the battery;
low-temperature treating the battery at a temperature equal to or lower than a minimum temperature according to the voltage of the battery; and
shredding the battery,
wherein the minimum temperature satisfies the following Formula 1: <Formula 1> $Minimum temperature = 21.42857 + \left(-21.1255\right) \times voltage + \left(-0.69264\right) \times {voltage}^{2} \pm 0.5$
wherein, in Formula 1, the voltage means a voltage of the battery.

2. The battery processing method of claim 1,
wherein the voltage of the battery measured in the measuring of the voltage of the battery is 0 to 4.2 V on a cell basis.

3. The battery processing method of claim 1,
wherein the low-temperature treating treats the battery at 10°C or lower.

4. The battery processing method of claim 1,
wherein the low-temperature treating treats the battery for a minimum freezing time or longer, and
wherein the minimum freezing time satisfies the following Formula 2: <Formula 2> 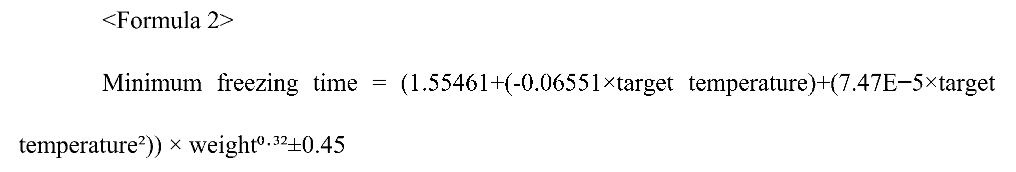 Minimum freezing time = (1.55461+(-0.06551×target temperature)+(7.47E-5×target temperature2)) × weight0·32±0.45
wherein, in Formula 2, the target temperature means a target temperature (°C) for low-temperature treating the battery, and the weight means a weight (kg) of the battery.

5. The battery processing method of claim 1,
wherein, in the step of low-temperature treating the battery for a minimum freezing time or longer according to the voltage of the battery,
when the battery is a module having a plurality of cells,
a freezing time of the battery is 10 hours or longer.

6. The battery processing method of claim 5,
wherein the module has a weight of 28 to 32 kg.

7. The battery processing method of claim 1,
wherein, in the step of low-temperature treating the battery for a minimum freezing time or longer according to the voltage of the battery,
when the battery is a cell,
a freezing time of the battery is 2 hours or longer.

8. The battery processing method of claim 7,
wherein the cell has a weight of 0.5 to 1.5 kg.

9. The battery processing method of claim 1,
wherein the shredding of the battery shreds the battery into a particle size range of 5 to 80 mm.

10. The battery processing method of claim 1,
wherein the shredding of the battery is performed using a two-shaft two-stage shredder.

11. The battery processing method of claim 1,
wherein the measuring of the voltage of the battery comprises reducing the voltage of the battery.

12. The battery processing method of claim 1,
wherein battery shredded material having undergone the shredding of the battery satisfies the following Condition 1 or Condition 2:
<Condition 1>
the layered structure may be a stacked structure of 1 layer or more and 7 layers or fewer;
and
<Condition 2>
a size of the battery shredded material may be 100 mm or less based on a major axis, which is the longest axis among width, length, and height directions.
